# DEMANDE DE BREVET EUROPEEN

(11) **EP 2 731 229 A1**
(43) Date de publication de la demande: **14.05.2014**
(21) Numéro de dépôt: 13191881.5
(22) Date de dépôt: 07.11.2013
(51) Int. Cl.: H02J 7/34, H02M 1/36

(54) **Système de pré-charge d'une capacité par une batterie**

(30) Priorité: 12.11.2012 FR 1260738
(71) Demandeur: SAFT, 93170 Bagnolet (FR)
(72) Inventeur: Maloizel, Serge, 16730 Trois Palis (FR); Dinand da Silva, Guillaume, 33000 Bordeaux (FR)
(74) Mandataire: Hirsch & Associés

(57) **Abrégé**

L'invention concerne un système de pré-charge d'une capacité (2) par une batterie (1), comprenant un interrupteur (3) et un élément de limitation (4) de courant de charge de la capacité (2) qui sont disposés de manière à pouvoir être traversés par le courant de charge circulant entre la batterie (1) et la capacité (2), caractérisé en ce que l'élément de limitation (4) de courant de charge de la capacité (2) est un dispositif à transfert d'énergie.

## Description

La présente invention concerne le domaine des systèmes de pré-charge d'une capacité par une batterie, le domaine des systèmes de charge d'une capacité par une batterie intégrant un système de pré-charge de cette capacité par cette batterie, ainsi que le domaine des méthodes de pré-charge d'une capacité par une batterie.

Le système de pré-charge est un système qui est mis en parallèle du contacteur ou de l'interrupteur principal et qui permet d'assurer la charge de la capacité d'entrée d'un dispositif qui est connecté à une batterie. Que ce soit en pré-charge ou en charge de la capacité, on parlera, dans la suite du texte, de courant de charge, et non pas de courant de pré-charge, même pendant la phase de pré-charge de la capacité.

Si ce système de pré-charge était absent, la fermeture de l'interrupteur principal directement sur la capacité d'entrée du dispositif connecté à la batterie, provoquerait un courant d'appel tellement important que celui-ci serait susceptible de provoquer un endommagement des contacts des contacteurs ou interrupteurs. Cet endommagement pourrait aller jusqu'au collage des contacts du contacteur rendant ensuite la déconnexion du système de la batterie impossible sans dégrader ou même détruire le contacteur.

Selon un premier art antérieur, décrit dans le brevet US 7932686, il est connu un système de pré-charge de la capacité ou du condensateur d'entrée du dispositif connecté à la batterie qui est principalement constitué d'un interrupteur et d'une résistance de limitation du courant de charge de cette capacité. Le système de pré-charge est disposé en parallèle d'un interrupteur principal commandant le système de charge proprement dit de la capacité. Le dimensionnement de ce système de pré-charge nécessite la réalisation d'un compromis entre d'une part la puissance qui sera dissipée dans la résistance de limitation du courant de charge et par conséquent la taille de cette résistance de limitation du courant de charge et d'autre part le temps de pré-charge nécessaire à une pré-charge suffisante de la capacité. Par conséquent, pour un dispositif à contraintes élevées, dont les performances souhaitées sont élevées, soit le temps de pré-charge est rendu faible au prix d'une résistance de limitation de courant de charge relativement grande et donc tout à la fois complexe et coûteuse, soit la résistance de limitation de courant de charge reste d'une taille raisonnable au prix d'un temps de pré-charge qui reste notable et souvent trop élevé.

Plus précisément, dans ce premier art antérieur, le dimensionnement du système de pré-charge résulte d'un compromis réalisé entre d'une part la puissance qui sera dissipée dans la résistance et donc sa taille et d'autre part le temps de pré-charge souhaité.

En effet, la pré-charge obéit aux lois de charge d'un condensateur à travers une résistance, soit V_condensateur = V_batterie x (1 - e^{-t/RC}) avec V_condensateur étant la tension aux bornes de la capacité ou du condensateur et V_batterie étant la tension aux bornes de la batterie, R étant la valeur de la résistance de limitation de tension et C étant la valeur de la capacité, t étant le temps.

On a par ailleurs I_résistance = V_batterie / R x e^{-t/RC}, avec I_résistance étant le courant charge qui traverse la résistance de limitation de courant de charge, pendant la pré-charge de la capacité, ce qui entraine :
- un temps de pré-charge égal à : 5 x R x C
- un courant de démarrage égal à : Vbatterie / R
- une puissance moyenne dissipée dans la résistance égale à : ½ x C x Vbatterie² /(5 x R x C).

Il apparaît que pour limiter le courant de charge au démarrage de la pré-charge, comme aussi pour limiter la puissance moyenne dissipée dans la résistance de limitation du courant de charge, il faut toujours augmenter la valeur de la résistance de limitation de courant de charge, ce qui augmente le temps de pré-charge.

Inversement, pour des valeurs plus faibles de cette résistance de limitation de courant de charge, les paramètres précédents, varient en sens inverse, et cette fois c'est la taille et le coût de la résistance qui vont devenir trop élevés. Certes, un compromis est réalisable et réalisé dans l'art antérieur, mais pour un dispositif à performances élevées, le compromis devient rapidement très coûteux.

Selon un deuxième art antérieur, décrit dans la demande de brevet EP 2400649, il est connu un système de pré-charge fonctionnellement équivalent au précédent, dans lequel la résistance de limitation de courant de charge de la capacité est réalisée par un transistor à effet de champ fonctionnant en mode résistance variable mise à une valeur moyenne d'impédance. L'élément essentiel réalisant la limitation de courant de charge lors de la pré-charge de la capacité est une résistance.

Le but de la présente invention est de fournir un système de pré-charge palliant au moins partiellement les inconvénients précités.

Plus particulièrement, l'invention vise à fournir un système de pré-charge d'une capacité par une batterie au travers d'un élément de limitation de courant de charge qui assure performances élevées, temps de pré-charge court, courant de charge au démarrage limité, et/ou modeste puissance dissipée dans l'élément de limitation de courant de charge, le tout obtenu à l'aide d'un élément de limitation de courant de charge qui soit relativement simple et bon marché, à tout le moins meilleur marché qu'une grosse et performante résistance de limitation de courant de charge.

Au lieu de limiter le courant de pré-charge de la capacité à l'aide d'une résistance, le système de pré-charge objet de l'invention prévoit préférentiellement d'utiliser un système à découpage basé sur un interrupteur et une inductance.

Ce système de pré-charge permet préférentiellement de réduire la puissance à dissiper dans l'élément de limitation de courant de charge, de réduire le temps de pré-charge de la capacité et par conséquence de rendre disponible l'énergie de la batterie plus rapidement pour les opérations suivantes de charge, voire d'utilisation. Ce système de pré-charge présente préférentiellement également l'avantage d'occuper un volume plus faible et de coûter moins cher, en comparaison avec les premier et deuxième arts antérieurs précités, à performances équivalentes.

En effet, le système objet de l'invention est préférentiellement basé sur un système à transfert d'énergie, ce qui entraine une dissipation d'énergie bien plus faible au niveau des composants que dans le système à résistance des premier et deuxième arts antérieurs. De ce fait, il va alors occuper un volume bien plus petit.

De plus, dans les premier et deuxième arts antérieurs, l'élément de limitation de courant de charge est réalisé en composants discrets interconnectés par fils et montés avec les organes électrotechniques. Le système de pré-charge objet de l'invention peut avantageusement être intégré directement au niveau du système de gestion de la batterie (BMS = Battery Management System en langue anglaise) en composants directement intégrés sur un circuit imprimé. D'où, dans ce cas avantageux, un gain supplémentaire de compacité, ainsi qu'un gain supplémentaire de coût associé.

L'ensemble des avantages précédents décrits peuvent aboutir à une réduction très significative du coût de ce système de pré-charge. Dans un exemple d'application préférentiel, pour une batterie en basse tension, le système de pré-charge réalisé avec un interrupteur et une résistance de puissance pour limiter le courant de charge, d'environ 150W, correspondant au type de système selon l'art antérieur avec résistance de limitation de charge de courant, peut coûter jusqu'au triple d'un système de pré-charge basé sur l'utilisation d'une inductance comme élément de limitation de courant de charge, conformément à un aspect de l'invention.

A cette fin, la présente invention propose un système de pré-charge d'une capacité par une batterie, comprenant un interrupteur et un élément de limitation de courant de charge de la capacité qui sont disposés de manière à pouvoir être traversés par le courant de charge circulant entre la batterie et la capacité, caractérisé en ce que l'élément de limitation de courant de charge de la capacité est un dispositif à transfert d'énergie. Par comparaison, les systèmes de pré-charge selon l'art antérieur sont des dispositifs à dissipation d'énergie.

A cette fin, la présente invention propose également un système de pré-charge d'une capacité par une batterie, comprenant un interrupteur et un élément de limitation de courant de charge de la capacité qui sont disposés de manière à pouvoir être traversés par le courant de charge circulant entre la batterie et la capacité, caractérisé en ce que l'élément de limitation de courant de charge de la capacité est une inductance.

A cette fin, la présente invention propose aussi un système de pré-charge d'une capacité par une batterie, comprenant un interrupteur et un dispositif de limitation de courant de charge de la capacité qui sont disposés de manière à pouvoir être traversés par le courant de charge circulant entre la batterie et la capacité, caractérisé en ce que le dispositif de limitation de courant de charge de la capacité comporte une inductance qui assure la majorité, de préférence l'essentiel, de l'effet de limitation de courant de charge de la capacité.

A cette fin, la présente invention propose encore une méthode de pré-charge d'une capacité par une batterie, au travers d'un élément de limitation de courant de charge de ladite capacité, comprenant alternativement : une étape de charge dudit élément de limitation, par ladite batterie ; une étape de décharge dudit élément de limitation, dans ladite capacité.

Suivant des modes de réalisation préférés, l'invention comprend une ou plusieurs des caractéristiques suivantes qui peuvent être utilisées séparément ou en combinaison partielle entre elles ou en combinaison totale entre elles.

De préférence, l'interrupteur et l'élément de limitation de courant de charge de la capacité forment un système à découpage du courant de charge de la capacité. Lorsque l'interrupteur est ouvert, il permet à l'élément de limitation de courant de charge d'emmagasiner de l'énergie en provenance de la batterie. Lorsque l'interrupteur est fermé, il laisse l'élément de limitation de courant de charge restituer l'énergie emmagasinée à destination de la capacité à pré-charger.

De préférence, la fréquence de découpage est de préférence supérieure au kHz, encore plus de préférence supérieure à la dizaine ou centaine de kHz. Cette fréquence de découpage élevée permet de faire monter la tension aux bornes de la capacité progressivement et régulièrement pendant la phase de pré-charge.

De préférence, la commande de l'interrupteur est disposée de manière à ce que l'interrupteur soit alternativement fermé et ouvert de manière à alternativement charger l'inductance et décharger l'inductance dans la capacité. C'est l'inductance qui sert d'élément tampon réalisant le transfert d'énergie entre la batterie et la capacité.

De préférence, la commande de l'interrupteur est disposée de manière à ce que l'interrupteur soit alternativement fermé et ouvert à une fréquence périodique, de préférence supérieure au kHz, encore plus de préférence supérieure à la dizaine ou centaine de kHz.

De préférence, la commande de l'interrupteur est disposée de manière à ce que l'interrupteur soit alternativement fermé et ouvert de manière à alternativement charger l'inductance jusqu'à un premier seuil prédéterminé de courant et décharger l'inductance dans la capacité jusqu'à un deuxième seuil prédéterminé de courant strictement inférieur au premier seuil, le deuxième seuil étant de préférence inférieur à la moitié du premier seuil. Cette différence relativement importante entre les deux seuils déclenchant le basculement entre les phases de charge et de décharge, tout au long de la période de pré-charge de la capacité, permet à l'élément de limitation de courant de charge, qui est de préférence une inductance, d'emmagasiner et de restituer, c'est-à-dire de transférer, une quantité notable d'énergie électrique à chaque fois.

De préférence, le système de pré-charge comprend aussi une résistance disposée en série entre l'inductance et la capacité. L'association de l'inductance et de cette résistance permet de mieux réguler le courant de recharge de l'inductance et le courant de décharge de l'inductance dans la capacité pendant la phase de pré-charge, car cette charge et cette décharge s'effectuent au travers de cette résistance et non pas directement. De préférence, la valeur de ladite résistance est comprise entre 10mohms et 1ohm.

De préférence, le système de pré-charge comprend une diode disposée en série entre l'inductance et la capacité, de manière à ne permettre le passage du courant que dans le sens de l'inductance vers la capacité, notamment dans le cas où le transistor de l'interrupteur est de type FET ou MOSFET. Ainsi, le branchement d'un chargeur de batterie en lieu et place de la capacité empêche de procéder à la recharge de la batterie via le système de pré-charge, mais oblige au contraire à procéder à la recharge de la batterie via le système de charge : c'est une mesure de précaution.

De préférence, l'interrupteur est un transistor commandé par une modulation en largeur d'impulsion. Ce type de commande est par exemple particulièrement adapté à la plage, relativement élevée, de fréquences de découpage préférentiellement envisagée.

De préférence, le système de pré-charge est un système de pré-charge de batterie basse tension, de préférence de batterie dont la tension d'alimentation est inférieure à 100 volts, encore plus de préférence de batterie dont la tension d'alimentation est inférieure à 70 volts. Le système de pré-charge selon l'invention est utilisable pour des batteries haute tension comme pour des batteries basse tension. Toutefois, la mise en oeuvre sur des batteries haute tension sera un peu plus complexe car elle nécessitera l'utilisation de composants haute tension et, par conséquent, le gain en termes de simplicité et de coût sera moins important que le gain réalisé dans le cas d'une batterie basse tension. Mais, il peut malgré tout s'avérer intéressant au moins pour certaines applications haute tension, en particulier quand les dimensions du système doivent être faibles.

L'invention concerne également un système de charge d'une capacité par une batterie, comprenant un interrupteur principal disposé en parallèle d'un système de pré-charge de ladite capacité par ladite batterie selon l'invention, et la commande de l'interrupteur principal est disposée de manière à ce que l'interrupteur principal soit ouvert lorsque le système de pré-charge fonctionne, l'interrupteur principal reliant de préférence directement ladite batterie à ladite capacité.

De préférence, la valeur de ladite inductance est comprise entre 10 micro henry et 1 milli henry.

De préférence, l'alternance de ladite étape de charge et de ladite étape de décharge est réalisée plusieurs fois, de préférence plusieurs fois par seconde, pendant ladite pré-charge de ladite capacité, encore plus de préférence avec une fréquence supérieure au kHz ou supérieure à la dizaine ou à la centaine de kHz.

D'autres caractéristiques et avantages de l'invention apparaîtront à la lecture de la description qui suit d'un mode de réalisation préféré de l'invention, donnée à titre d'exemple et en référence au dessin annexé.
La figure 1 représente schématiquement un exemple d'un système de charge incluant un système de pré-charge selon l'art antérieur, d'une capacité par une batterie.
La figure 2 représente schématiquement un exemple d'une courbe de pré-charge à l'aide d'un système de pré-charge selon l'art antérieur, d'une capacité par une batterie.
La figure 3 représente schématiquement un exemple d'une courbe de dissipation de puissance dans la résistance de limitation de courant d'un système de pré-charge selon l'art antérieur, lors de la pré-charge d'une capacité par une batterie.
La figure 4 représente schématiquement un exemple d'un système de charge incluant un système de pré-charge selon l'invention, d'une capacité par une batterie.
La figure 5 représente schématiquement un exemple d'une courbe de pré-charge à l'aide d'un système de pré-charge selon l'invention, d'une capacité par une batterie.

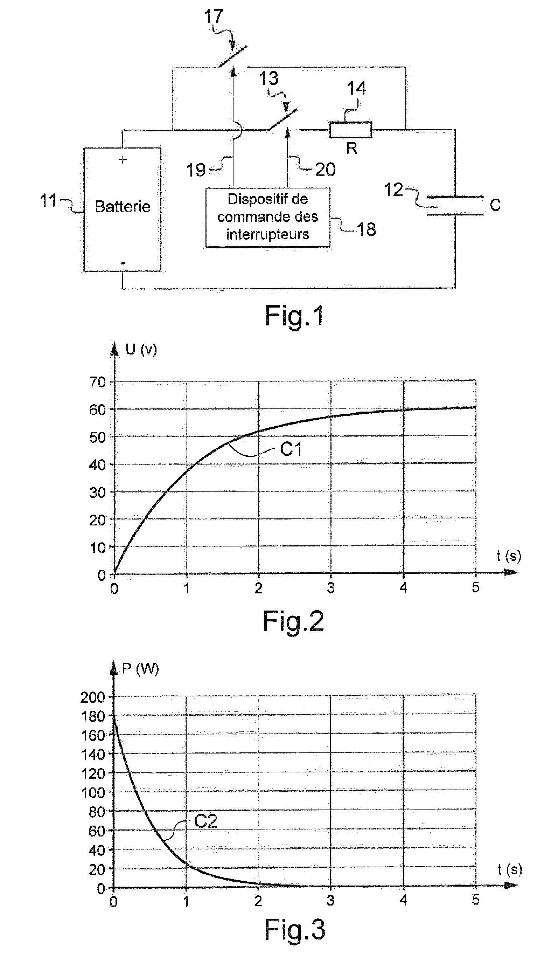

La figure 1 représente schématiquement un exemple d'un système de charge incluant un système de pré-charge selon l'art antérieur, d'une capacité par une batterie. Une batterie 11 est destinée à charger en énergie électrique une capacité 12. Cette charge peut être réalisée soit par l'intermédiaire d'un système de pré-charge soit par l'intermédiaire d'un système de charge proprement dit, c'est-à-dire par l'intermédiaire de l'interrupteur principal 17 ; en fait, d'abord dans un premier temps par l'intermédiaire du système de pré-charge, ensuite dans un deuxième temps par l'intermédiaire du système de charge proprement dit.

Le système de pré-charge comprend l'association en série d'un interrupteur 13 et d'une résistance 14, ainsi que la partie du dispositif de commande 18 des interrupteurs qui assure l'ouverture et la fermeture de l'interrupteur 13. Le système de pré-charge est situé entre le pôle positif de la batterie 11 et l'une des bornes de la capacité 12. En aval de la capacité 12, se trouve un dispositif d'utilisation, non représenté pour des raisons de simplicité, lequel va utiliser l'énergie stockée dans la capacité 12.

Le système de charge comprend un interrupteur principal 17, ainsi que la partie du dispositif de commande 18 des interrupteurs qui assure l'ouverture et la fermeture de l'interrupteur principal 17, ainsi qu'également le système de pré-charge. Le système de charge est situé entre le pôle positif de la batterie 11 et la même borne de la capacité 12 que le système de pré-charge. L'interrupteur principal 17, du système de charge est disposé en parallèle du système pré-charge. Le système de commande 18 présente plusieurs connexions d'interface 19 et 20. La connexion d'interface 19 commande l'interrupteur principal 17. La connexion d'interface 20 commande l'interrupteur 13.

Dans un premier temps, l'interrupteur 13 est fermé tandis que l'interrupteur principal 17 est ouvert. Une pré-charge de la capacité 12 par la batterie 11 au travers de la résistance 14 est réalisée jusqu'à ce que la tension aux bornes de la capacité 12 soit voisine de la tension aux bornes de la batterie 11. Le temps de pré-charge dure environ 5τ, avec τ taux valant RC et R la valeur de la résistance 14 et C la valeur de la capacité 12. Dans un second temps, l'interrupteur principal 17 est fermé tandis que l'interrupteur 13 est ouvert. Une charge de la capacité 12 est maintenue directement par la batterie 11.

La figure 2 représente schématiquement un exemple d'une courbe de pré-charge à l'aide d'un système de pré-charge selon l'art antérieur, d'une capacité par une batterie. La courbe C1 montre l'allure de la tension U, exprimée en volts V, aux bornes d'une capacité 12 de valeur 50 mF, pré-chargée à partir d'une batterie 11 de tension 60 volts via une résistance 14 de valeur 20 Ω, en fonction du temps t, exprimé en secondes s.

La courbe C1 représente la courbe théorique de pré-charge, en réalité celle-ci est arrêtée au bout d'un certain temps (par exemple 2 secondes) pour procéder ensuite à la charge proprement dite, mais la tension cible de 60 volts n'est pas atteinte, la tension atteinte dépasse en effet à peine 50 volts. Atteindre la tension cible de 60 volts ou s'en approcher très près demanderait un temps trop important.

La figure 3 représente schématiquement un exemple d'une courbe de dissipation de puissance dans la résistance de limitation de courant d'un système de pré-charge selon l'art antérieur, lors de la pré-charge d'une capacité par une batterie. La courbe C2 montre l'allure de la puissance instantanée P, exprimée en watts W, générée au niveau de la résistance 14 de 20 Ω lors de la pré-charge de la capacité 12 de valeur 50 mF pré-chargée à partir d'une batterie 11 de tension 60 volts. On voit que la valeur initiale de 180 W est très élevée, même si ensuite, elle a tendance à chuter relativement rapidement.

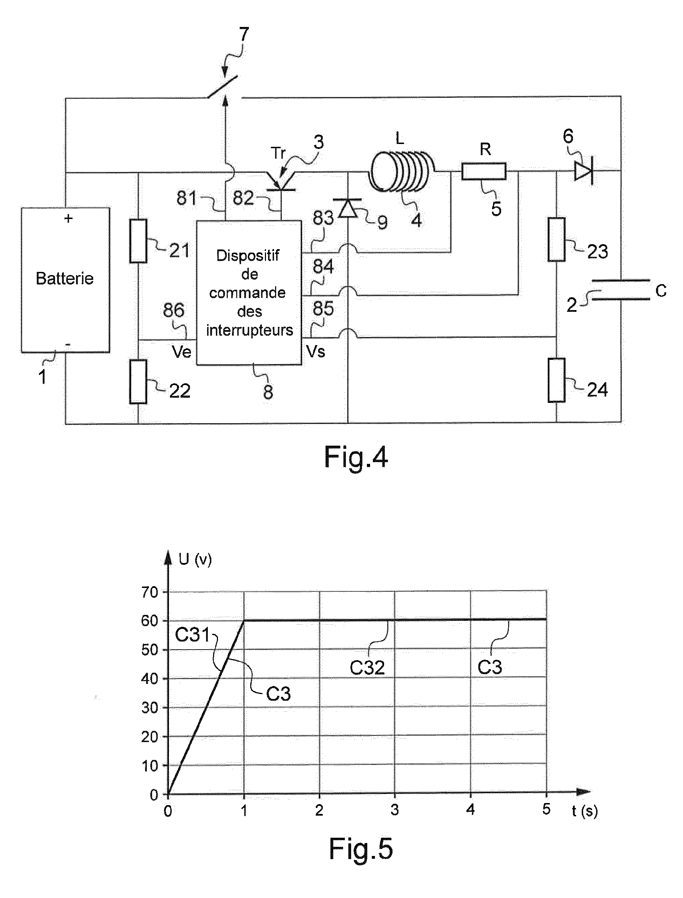

La figure 4 représente schématiquement un exemple d'un système de charge incluant un système de pré-charge selon l'invention, d'une capacité par une batterie. Une batterie 1 est destinée à charger en énergie électrique une capacité 2. Cette charge peut être réalisée soit par l'intermédiaire d'un système de pré-charge soit par l'intermédiaire d'un système de charge proprement dit ; en fait, d'abord dans un premier temps par l'intermédiaire du système de pré-charge, ensuite dans un deuxième temps par l'intermédiaire du système de charge proprement dit.

Le système de pré-charge comprend l'association en série d'un interrupteur 3, qui est avantageusement un transistor Tr, suivie d'une inductance 4 d'abord d'une résistance 5 ensuite et puis d'une diode 6, passante dans le sens de la résistance 5 vers la capacité 2, ainsi que la partie du dispositif de commande 8 des interrupteurs qui assure l'ouverture et la fermeture de l'interrupteur 3. Le transistor bipolaire Tr a son émetteur qui est relié à la batterie 11, son collecteur qui est relié à l'inductance 4 et sa base qui est reliée à l'une des connexions d'interface du dispositif de commande 8. A la place d'un transistor bipolaire, l'interrupteur 3 pourrait utiliser un transistor à effet de champ. La diode 6 sert à éviter de pouvoir recharger la batterie 1 via le système de pré-charge dans le cas où un chargeur est connecté à la place de la capacité 2 et que l'interrupteur 3 est réalisé à l'aide d'un transistor à effet de champ, par exemple de technologie FET ou MOSFET. L'interrupteur 3, le dispositif de commande 8, l'inductance 4 et la diode 9 font fonction de convertisseur DC/DC et l'interrupteur 3 réalise le hachage ou découpage du signal électrique de manière à permettre l'alternance entre charge de l'inductance 4 et décharge de l'inductance 4. Le système de pré-charge est situé entre le pôle positif de la batterie 1 et l'une des bornes de la capacité 2. En aval de la capacité 2, se trouve un dispositif d'utilisation, non représenté pour des raisons de simplicité, lequel va utiliser l'énergie stockée dans la capacité 2.

Dans un exemple numérique préférentiel, la résistance 5 dont la valeur est préférentiellement comprise entre 10mohms et 1ohm, de préférence entre 50mohms et 1ohm, vaut par exemple 0.5 ohm. L'inductance 4, dont la valeur est préférentiellement inférieure au milli henry vaut par exemple 47 micro henry. La valeur de l'inductance 4 est de préférence comprise entre 10 micro henry et 1 milli henry.

Le système de charge comprend un interrupteur principal 7, ainsi que la partie du dispositif de commande 8 des interrupteurs qui assure l'ouverture et la fermeture de l'interrupteur principal 7, ainsi qu'également le système de pré-charge. Le système de charge est situé entre le pôle positif de la batterie 1 et la même borne de la capacité 2 que le système de pré-charge. L'interrupteur principal du système de charge est disposé en parallèle du système pré-charge.

Le système de commande 8 présente plusieurs connexions d'interface 81 à 86. La connexion d'interface 81 commande l'interrupteur principal 7. La connexion d'interface 82 commande l'interrupteur 3, et plus précisément la base du transistor bipolaire 3. Les connexions d'interface 83 et 84 servent à mesurer la chute de tension aux bornes de la résistance 5, chute de tension grâce à laquelle le courant traversant la résistance 5 peut être obtenu par le dispositif de commande 8. C'est cette valeur de courant traversant la résistance 5 qui est utilisée lorsqu'elle dépasse des seuils prédéterminés pour commander l'ouverture et la fermeture de l'interrupteur 3 via la connexion d'interface 82. La connexion d'interface 85 présente la tension de sortie Vs du dispositif de commande 8. La connexion d'interface 86 présente la tension d'entrée Ve du dispositif de commande 8.

Les tensions d'entrée Ve et de sortie Vs du dispositif de commande 8 sont nettement plus faibles que la tension de la batterie 1. Les tensions d'entrée Ve et de sortie Vs du dispositif de commande 8 sont de l'ordre de 5 à 10 volts et nettement plus faibles que la tension de batterie 1 qui vaut par exemple 60 volts. D'où l'utilisation d'une part, en entrée du dispositif de commande 8, d'un premier pont diviseur de tension comprenant les résistances 21 et 22, et d'autre part, en sortie du dispositif de commande 8, d'un second pont diviseur de tension comprenant les résistances 23 et 24. Une diode 9 est située entre d'une part le pôle négatif de la batterie 1 et d'autre part le noeud entre l'interrupteur 3 et l'inductance 4, le sens passant de la diode 9 étant du pôle négatif de la batterie 1 vers le noeud entre l'interrupteur 3 et l'inductance 4.

Dans un premier temps, l'interrupteur 3 est commuté (ouvert-fermé rapidement) tandis que l'interrupteur principal 7 est ouvert. Une pré-charge de la capacité 2 par la batterie 1 au travers de l'interrupteur 3, de l'inductance 4, de la diode 9 et de la résistance 5 est réalisée jusqu'à ce que la tension aux bornes de la capacité 2 soit voisine de la tension aux bornes de la batterie 1. Dans un second temps, l'interrupteur principal 7 est fermé tandis que l'interrupteur 3 est ouvert. Une charge de la capacité 2 est maintenue directement par la batterie 1.

Plus précisément, pendant la phase de pré-charge, le dispositif de commande 8 commande l'ouverture de l'interrupteur principal 7 et commande en modulation à largeur d'impulsion (PWM = Pulse Width Modulation en langue anglaise) le transistor de l'interrupteur 3 de manière à avoir un courant quasi constant dans la résistance 5.

Le dispositif de commande 8 commande la conduction du transistor de l'interrupteur 3, ce qui permet d'emmagasiner de l'énergie dans l'inductance 4 jusqu'à ce que le courant atteigne un premier seuil prédéfini S1 égale à M + X. Quand ce premier seuil S1 est atteint, le système de commande ordonne l'ouverture du transistor du premier interrupteur 3, l'inductance 4 libère alors son énergie vers la capacité 12 via la résistance 5, la diode 9 dite diode de roue libre et la diode 6. Quand le transistor de l'interrupteur 3 est fermé, le courant circule de la batterie 1 vers la capacité 2 via l'inductance 4, la résistance 5 et la diode 6, l'inductance 4 emmagasinant alors de l'énergie. Quand le transistor de l'interrupteur 3 est ouvert, il faut que l'inductance 4 puisse libérer son énergie sous forme de courant, comme il ne peut plus y avoir de courant via le transistor de l'interrupteur 3, la diode 9 permet au courant de pouvoir continuer à circuler de l'inductance 4 vers la capacité 2 via la résistance 5, la diode 6 et cette diode 9 dite de roue libre.

Ce transfert d'énergie de l'inductance 4 vers la capacité 12 va provoquer une augmentation de la tension aux bornes de la capacité 12. Au fur et à mesure que l'énergie dans l'inductance 4 diminue, le courant dans la résistance 5 diminue, et lorsque le courant tombe en dessous d'un deuxième seuil prédéfini S2 qui vaut M - X, alors le dispositif de commande 8 commande à nouveau la conduction du transistor de l'interrupteur 3 pour relancer une phase de recharge d'énergie dans l'inductance 4. Dans un exemple préférentiel, M vaut 3 Ampère et représente la valeur moyenne du courant de charge de la capacité 12, X vaut 1.5 Ampère, S1 vaut 4.5 Ampère, et S2 vaut 1.5 Ampère. X vaut de préférence entre 30% et 70% de M, par exemple 50%.

Ce processus de transfert d'énergie dans l'inductance 4 puis dans la capacité 12 se poursuit jusqu'à ce que la tension aux bornes de la capacité 12 atteigne quasiment la tension aux bornes de la batterie 1, à la chute de tension dans la diode 6 près. A ce moment, le dispositif de commande 8 commande la fermeture de l'interrupteur principal 17 et l'ouverture du transistor de l'interrupteur 3, car le processus de pré-charge peut être considéré comme terminé et le processus de maintien de charge proprement dit peut commencer.

La figure 5 représente schématiquement un exemple d'une courbe de pré-charge à l'aide d'un système de pré-charge selon l'invention, d'une capacité par une batterie. La courbe C3 montre l'allure de la tension U, exprimée en volts V, aux bornes d'une capacité 12 de valeur 50 mF, pré-chargée à partir d'une batterie 1 de tension 60 volts via un système de commande 8 qui ordonne la fermeture de l'interrupteur 3 pour un courant de 4.5 Ampères et son ouverture pour un courant de 1.5 Ampère, soit un courant moyen de 3A, en fonction du temps t, exprimé en secondes s, et ceci avec une fréquence de l'ordre de quelques dizaines de kilohertz.

La courbe C3 représente la courbe théorique de pré-charge, qui comprend une première phase de montée régulière jusqu'à atteindre la tension cible de 60 volts, ce qui correspond à la rampe C31, durant par exemple 1 seconde, suivie d'une deuxième phase de tension constante à la valeur de la tension cible 60 volts, ce qui correspond au plateau C32. La portion de courbe C31 est une rampe à l'échelle macroscopique à cause de la fréquence élevée de découpage utilisée. Si l'on zoome très fortement sur cette rampe C31, on s'aperçoit en réalité que c'est une courbe en escalier dont les marches correspondent à la succession des phases où l'énergie de la batterie 1 est emmagasinée dans l'inductance 4 puis restituée à la capacité 2. Chaque marche correspond à une séquence emmagasinage puis restitution.

Pratiquement, seule la rampe C31 est utilisée, la phase de pré-charge étant arrêtée après la fin de la rampe C31 ou juste après le début du plateau C32, pour pouvoir ensuite procéder au maintien de la charge proprement dite, charge réalisée à la valeur de tension cible de 60 volts. Le temps de pré-charge pour atteindre la valeur de tension cible, dans le cas de la courbe C3 de la figure 5 correspondant au système de pré-charge décrit au niveau de la figure 4 conformément à l'invention, a été considérablement réduit, par rapport à la courbe C1 de la figure 2 correspondant au système de pré-charge décrit au niveau de la figure 1 conformément à l'art antérieur.

Bien entendu, la présente invention n'est pas limitée aux exemples et au mode de réalisation décrits et représentés, mais elle est susceptible de nombreuses variantes accessibles à l'homme de l'art.

## Revendications

1. Système de pré-charge d'une capacité (2) par une batterie (1), comprenant un interrupteur (3) et un élément de limitation (4) de courant de charge de la capacité (2) qui sont disposés de manière à pouvoir être traversés par le courant de charge circulant entre la batterie (1) et la capacité (2), **caractérisé en ce que** l'élément de limitation (4) de courant de charge de la capacité (2) est un dispositif à transfert d'énergie.

2. Système de pré-charge selon la revendication 1, **caractérisé en ce que** l'interrupteur (3) et l'élément de limitation (4) de courant de charge de la capacité (2) forment un système à découpage du courant de charge de la capacité (2).

3. Système de pré-charge selon la revendication 2, **caractérisé en ce que** la fréquence de découpage est de préférence supérieure au kHz, encore plus de préférence supérieure à la dizaine ou centaine de kHz.

4. Système de pré-charge d'une capacité par une batterie, comprenant un interrupteur (3) et un élément de limitation (4) de courant de charge de la capacité qui sont disposés de manière à pouvoir être traversés par le courant de charge circulant entre la batterie (1) et la capacité (2), **caractérisé en ce que** l'élément de limitation (4) de courant de charge de la capacité (2) est une inductance (4).

5. Système de pré-charge selon la revendication 4, **caractérisé en ce que** la commande de l'interrupteur (3) est disposée de manière à ce que l'interrupteur (3) soit alternativement fermé et ouvert de manière à alternativement charger l'inductance (4) et décharger l'inductance (4) dans la capacité (2).

6. Système de pré-charge selon la revendication 5, **caractérisé en ce que** la commande de l'interrupteur (3) est disposée de manière à ce que l'interrupteur (3) soit alternativement fermé et ouvert à une fréquence périodique, de préférence supérieure au kHz, encore plus de préférence supérieure à la dizaine ou centaine de kHz.

7. Système de pré-charge selon la revendication 5 ou 6, **caractérisé en ce que** la commande de l'interrupteur (3) est disposée de manière à ce que l'interrupteur (3) soit alternativement fermé et ouvert de manière à alternativement charger l'inductance (4) jusqu'à un premier seuil prédéterminé (S1) de courant et décharger l'inductance (4) dans la capacité (2) jusqu'à un deuxième seuil prédéterminé (S2) de courant strictement inférieur au premier seuil (S1), le deuxième seuil (S2) étant de préférence inférieur à la moitié du premier seuil (S1).

8. Système de pré-charge selon l'une quelconque des revendications précédentes, **caractérisé en ce qu'**il comprend une résistance (5) disposée en série entre l'inductance (4) et la capacité (2).

9. Système de pré-charge selon la revendication 8, **caractérisé en ce que** la valeur de ladite résistance (5) est comprise entre 10mohms et 1ohm.

10. Système de pré-charge selon l'une quelconque des revendications précédentes, **caractérisé en ce qu'**il comprend une diode (6) disposée en série entre l'inductance (4) et la capacité (2), de manière à ne permettre le passage du courant que dans le sens de l'inductance (4) vers la capacité (2).

11. Système de pré-charge selon l'une quelconque des revendications précédentes, **caractérisé en ce que** l'interrupteur (3) est un transistor commandé par une modulation en largeur d'impulsion.

12. Système de pré-charge selon l'une quelconque des revendications précédentes, **caractérisé en ce que** le système de pré-charge est un système de pré-charge de batterie (1) basse tension, de préférence de batterie (1) dont la tension d'alimentation est inférieure à 100 volts, encore plus de préférence de batterie (1) dont la tension d'alimentation est inférieure à 70 volts.

13. Système de charge d'une capacité (2) par une batterie (1), comprenant un interrupteur principal (7) disposé en parallèle d'un système de pré-charge de ladite capacité (2) par ladite batterie (1) selon l'une quelconque des revendications précédentes, **caractérisé en ce que** la commande de l'interrupteur principal (7) est disposée de manière à ce que l'interrupteur principal (7) soit ouvert lorsque le système de pré-charge fonctionne, l'interrupteur principal (7) reliant de préférence directement ladite batterie (1) à ladite capacité (2).

14. Système de pré-charge selon l'une quelconque des revendications précédentes, **caractérisé en ce que** la valeur de ladite inductance (4) est comprise entre 10 micro henry et 1 milli henry.

15. Méthode de pré-charge d'une capacité (2) par une batterie (1), au travers d'un élément de limitation (4) de courant de charge de ladite capacité (2), comprenant alternativement :
- une étape de charge dudit élément de limitation (4), par ladite batterie (1) ;
- une étape de décharge dudit élément de limitation (4), dans ladite capacité (2).

16. Méthode de pré-charge selon la revendication 15, **caractérisée en ce que** l'alternance de ladite étape de charge et de ladite étape de décharge est réalisée plusieurs fois, de préférence plusieurs fois par seconde, pendant ladite pré-charge de ladite capacité, encore plus de préférence avec une fréquence supérieure au kHz ou supérieure à la dizaine ou centaine de kHz.
